# EUROPÄISCHE PATENTSCHRIFT

(11) **EP 1 125 177 B1**
(45) Veröffentlichungstag und Bekanntmachung des Hinweises auf die Patenterteilung: **07.01.2004**
(21) Anmeldenummer: 99953909.1
(22) Anmeldetag: 21.10.1999
(51) Int. Cl.: G05D 11/10, F26B 5/04, F26B 17/14, B01J 2/16, B01L 5/00

(54) **VERFAHREN UND VORRICHTUNG ZUM TROCKNEN VON MATERIALIEN**
METHOD AND DEVICE FOR DRYING MATERIALS
PROCEDE ET DISPOSITIF POUR LE SECHAGE DE MATERIAUX

(30) Priorität: 21.10.1998 DE 19848558
(43) Veröffentlichungstag der Anmeldung: 22.08.2001
(73) Patentinhaber: Mikrowellen-Systeme MWS GmbH, 7240 Küblis (CH)
(72) Erfinder: LAUTENSCHLÄGER, Werner, D-88299 Leutkirch (DE)
(74) Vertreter: Rupp, Christian, Dipl.-Phys.
(86) Internationale Anmeldenummer: PCT/EP1999/007992
(87) Internationale Veröffentlichungsnummer: WO 2000/023861

(56) Entgegenhaltungen:
- DE-A- 4 322 499
- PATENT ABSTRACTS OF JAPAN vol. 1998, no. 04, 31. März 1998 (1998-03-31) & JP 09 318248 A (SHINKU KAGAKU KENKYUSHO;SAKAGUCHI DENNETSU KK), 12. Dezember 1997 (1997-12-12)
- PATENT ABSTRACTS OF JAPAN vol. 016, no. 533 (C-1002), 4. November 1992 (1992-11-04) & JP 04 200750 A (KUBOTA CORP), 21. Juli 1992 (1992-07-21)
- PATENT ABSTRACTS OF JAPAN vol. 014, no. 544 (C-0784), 4. Dezember 1990 (1990-12-04) & JP 02 233132 A (SANKYO CO LTD), 14. September 1990 (1990-09-14)

## Beschreibung

Die vorliegende Erfindung betrifft eine Vorrichtung zum Trocknen von Materialien in einem Aufnahmegefäß nach dem Oberbegriff von Anspruch 1.

Ein Trocknungsverfahren und ein Trocknungsbehälter der eingangs genannten Art sind beispielsweise aus der DE-A1 43 22 499 bekannt. Bei dem darin offenbarten Verfahren werden die Verdampfung und Trocknung des zu trocknenden Materials durch einen im Aufnahmegefäß entstehenden Unterdruck, der den Verdampfungspunkt erniedrigt, durch unmittelbare oder mittelbare Erwärmung des zu trocknenden Materials zur Beschleunigung des Verdampfungs- und Trocknungsprozesses, und durch einen durch das Aufnahmegefäß hindurch geleiteten Transportgasstrom, der die entstehenden Dämpfe aus dem Aufnahmegefäß heraus transportiert, forciert. Die unmittelbare oder mittelbare Erwärmung des zu trocknenden Materials kann dabei vorteilhafterweise durch Mikrowellen-Bestrahlung in einem Mikrowellen-Heizgerät erfolgen. Zur weiteren Unterstützung des Trocknungsvorganges und/oder zum Nachtrocknen oder trockenen Lagern des Materials im Aufnahmegefäß kann im unteren Bereich des Aufnahmegefäßes ein Trocknungsmittel, wie beispielsweise N₂, vorgesehen sein.

Bei dem vorbeschriebenen und anderen bekannten Trocknungssystemen wird entweder die Trocknungsdauer aufgrund von Erfahrungswerten eingestellt oder die Systeme verfügen über eine integrierte Waage im Probenraum, welche den Endpunkt des Trocknungsvorganges anzeigt. Bestimmt man die erforderliche Trocknungsdauer basierend auf Erfahrungswerten, so muß im allgemeinen ein entsprechend großer Sicherheitszuschlag zugegeben werden, damit eine ausreichende Trocknung des zu trocknenden Materials gewährleistet werden kann. Aber auch bei Systemen mit einer integrierten Waage muß mit einem entsprechenden Sicherheitszuschlag zur Trocknungsdauer gearbeitet werden, da unter anderem durch den Wärmeauftrieb im beheizten Aufnahmegefäß ein Wägen des zu trocknenden bzw. des trockenen Materials nicht mit ausreichender Genauigkeit möglich ist.

Ausgehend von dem vorgenannten Stand der Technik ist es deshalb eine Aufgabe der vorliegenden Erfindung, ein Verfahren zum Trocknen von Materialien sowie eine Vorrichtung zur Durchführung dieses Verfahrens bereitzustellen, mit dem bzw. der eine verbesserte Steuerung und/oder Regelung des Trocknungsprozesses und insbesondere eine genauere Bestimmung der Beendigung des Trocknungsprozesses möglich ist.

Diese Aufgabe wird durch die Vorrichtung mit den Merkmalen des Anspruches 1 gelöst.

Gemäß der vorliegenden Erfindung wird ein Sensors bzw. eine Meßvorrichtung zum Messen der relativen Luftfeuchtigkeit der aus dem Aufnahmegefäß abgeführten oder abgepumpten Luft in das System integriert. Anhand des von dieser Meßvorrichtung erfaßten Meßwertes kann zum einen der Zeitpunkt bestimmt werden, zu dem der Trocknungsprozeß beendet ist, und zum anderen der Trocknungsprozeß überwacht und optimiert, d.h. insbesondere beschleunigt werden, indem weitere Parameter des Trocknungsprozesses geregelt werden. Das vorgeschlagene Verfahren bzw. die vorgeschlagene Vorrichtung eignet sich insbesondere auch zur Trocknung von Materialien bzw. Proben mit unbekanntem Wassergehalt oder unbekannter Zusammensetzung. Außerdem werden die Trocknungsresultate nicht durch Schwankungen der Leistung der Wärmequelle oder anderer Komponenten und Umgebungsbedingungen beeinflußt. Ferner kann beispielsweise durch Aufintegrieren der Meßwerte der relativen Luftfeuchtigkeit über die Zeit zusätzlich zur gravimetrischen Bestimmung des Gewichtsverlustes der Probe auch der ursprüngliche Wassergehalt der Probe vor Beginn des Trocknungsprozesses ermittelt werden. Der so ermittelte Wassergehalt hat zudem eine höhere Selektivität, da der Meßwert des Gewichtsverlustes alle flüchtigen Anteile des Materials, und nicht nur den Wassergehalt erfaßt.

Vorzugsweise wird während des Trocknungsvorganges ein Transportgas durch das Aufnahmegefäß geleitet, welches den entstehenden Dampf aus dem Aufnahmegefäß heraustransportiert. Hierbei wird der Luftstrom, d.h. die Menge des dem Aufnahmegefäß zugeführten und/oder aus dem Aufnahmegefäß abgeführten oder abgepumpten Transportgases, vorteilhafterweise derart geregelt, daß das zu trocknende Material möglichst schnell trocknet. Insbesondere wird bei stark mit Dampf gesättigter Luft zu Beginn des Trocknungsprozesses der Luftstrom aus dem Aufnahmegefäß heraus groß geregelt, um die Feuchtigkeit rasch abzutransportieren.

Weiter ist es von Vorteil, das zu trocknende Material in dem Aufnahmegefäß direkt oder indirekt, insbesondere mittels Mikrowellen-Bestrahlung in einem Mikrowellen-Heizgerät zu erwärmen, um den Trocknungsvorgang zu beschleunigen. Die Erwärmung des zu trocknenden Materials, d.h. insbesondere die Mikrowellen-Bestrahlung, wird dabei vorteilhafterweise in Abhängigkeit von dem erfaßten Meßwert der relativen Luftfeuchtigkeit geregelt.

Ferner ist es vorteilhaft, die Menge des zugeführten und/oder abgeführten Transportgases derart zu regeln, daß in dem Aufnahmegefäß ein Unterdruck herrscht. Hierdurch wird der Siedepunkt des Wassers gesenkt und der Trocknungsvorgang somit beschleunigt.

Weiter kann zur Beschleunigung des Trocknungsvorganges in dem Aufnahmegefäß zusätzlich ein Trocknungsmittel, wie beispielsweise N₂, vorgesehen sein.

Weitere Ausgestaltungen und Weiterbildungen der Erfindung sind Gegenstand weiterer Unteransprüche.

Die vorliegende Erfindung wird nun anhand eines bevorzugten Ausführungsbeispieles unter Bezugnahme auf die beiliegende Zeichnung näher erläutert. Darin zeigen:
- Fig. 1: eine Prinzipdarstellung zur Erläuterung des Verfahrens und der Vorrichtung gemäß der vorliegenden Erfindung;
- Fig. 2: ein Ausführungsbeispiel einer Trocknungsvorrichtung gemäß der vorliegenden Erfindung im Schnitt;
- Fig. 3: ein Ausführungsbeispiel eines Aufnahmegefäßes für das zu trocknende Material gemäß der vorliegenden Erfindung im Schnitt; und
- Fig. 4: ein Diagramm mit Versuchsdaten zur Veranschaulichung des Trocknungsprozesses gemäß der vorliegenden Erfindung.

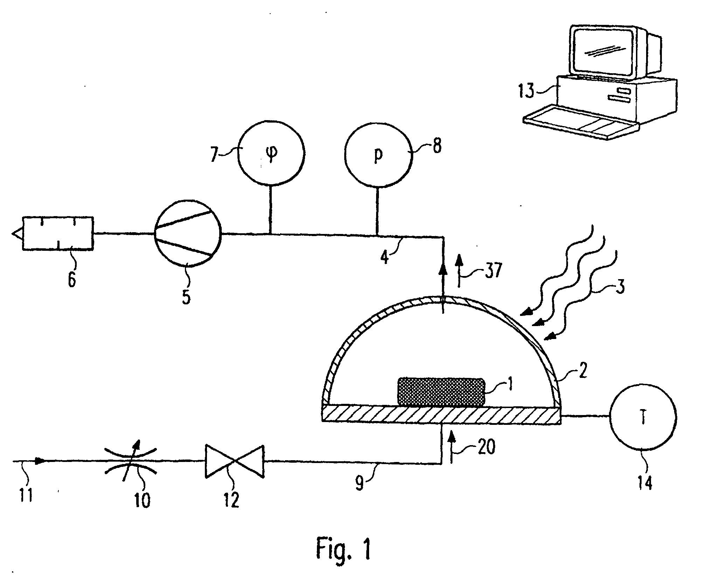

Zunächst soll anhand der Darstellung von Fig. 1 das Prinzip der Erfindung näher erläutert werden.

Das zu trocknende Material bzw. die zu trocknende Probe 1 wird in einem luftdicht verschließbaren Aufnahmegefäß 2 angeordnet. Das zu trocknende Material 1 wird direkt oder indirekt, beispielsweise mittels Mikrowellen-Bestrahlung 3, erwärmt. dadurch verdampft die Feuchtigkeit des Materials 1. Die Erwärmung bzw. die Temperatur T des zu trocknenden Materials 1 wird mittels eines Temperaturmeßgerätes 14 erfaßt.

Mittels einer Saug- bzw. Vakuumpumpe 5 wird die Luft 37 durch eine Abführungsleitung 4 aus dem Aufnahmegefäß 2 abgesaugt. Am Ausgang der Vakuumpumpe 5 ist ein Luftauslaß mit Schalldämpfer 6 vorgesehen. Die aus dem Aufnahmegefäß 2 abgesaugte Luft 37 wird dabei an einem Sensor 7, wie beispielsweise einem Hygrometer, zur Bestimmung der relativen Luftfeuchtigkeit ϕ vorbeigeführt, welcher deren relative Luftfeuchtigkeit ϕ mißt. Die Abführungsleitung 4 ist ferner mit einem Druckmeßgerät 8 zur Bestimmung des Druckes p in dem Aufnahmegefäß 2 verbunden.

Das Aufnahmegefäß 2 weist außerdem einen Leitungsanschluß für eine Zuleitung 9 auf, durch die dem Aufnahmegefäß ein Transportgas 20 zugeführt werden kann. In der Zuleitung 9 ist dabei ein Drosselventil 10 zum Regulieren der Menge des von einer Einlaßöffnung 11 zugeführten Transportgases 20 vorgesehen. Weiter ist in der Zuleitung 9 ein Absperrventil 12 zum Schließen des Leitungsanschlusses angeordnet.

Die von dem Sensor 7 erfaßten Meßwerte der relativen Luftfeuchtigkeit ϕ der/des aus dem Aufnahmegefäß 2 abgesaugten Luft bzw. Transportgases 37 und des Druckes p im Aufnahmegefäß 2 werden einer Regelvorrichtung 13, wie beispielsweise einem Prozeßrechner, zugeführt. Anhand dieser Meßwerte regelt dieser Prozeßrechner 13 über die Ventile 10 und 12 den zugeführten Transportgasstrom 20 in das Aufnahmegefäß 2, über die Vakuumpumpe 5 den aus dem Aufnahmegefäß 2 abgesaugten Luft- bzw. Transportgasstrom 37 und über die Mikrowellen-Bestrahlung 3 die Erwärmung des zu trocknenden Materials 1.

Zu Beginn des Trocknungsprozesses bei stark mit Feuchtigkeit gesättigter Luft 37 im Aufnahmegefäß 2 wird der Transportgasstrom durch das Aufnahmegefäß 2 hindurch groß gewählt, um die Feuchtigkeit schnell abzutransportieren. Bei trockenerer Luft 37 im Aufnahmegefäß gegen Ende des Trocknungsprozesses wird der Transportgasstrom reduziert, wodurch der Druck im Aufnahmegefäß 2 absinkt. Hierdurch wird der Siedepunkt des in dem zu trocknenden Material 1 enthaltenen Wassers gesenkt und das Material 1 zusätzlich getrocknet.

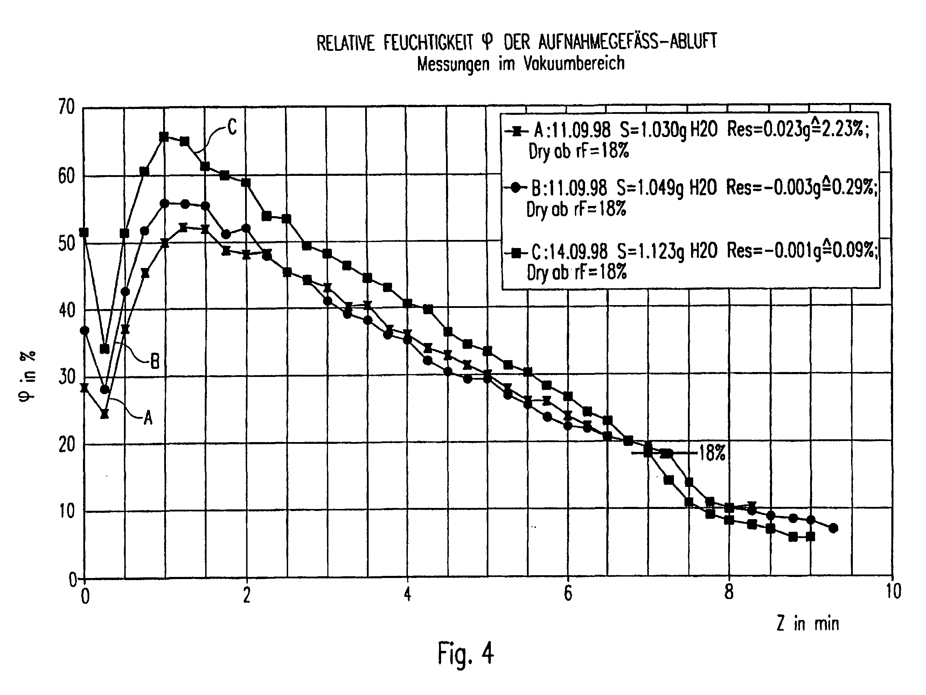

In Fig. 4 ist beispielhaft der zeitliche Verlauf der relativen Luftfeuchtigkeit ϕ des aus dem Aufnahmegefäß 2 abgesaugten Transportgases 37 für drei verschiedene Proben A, B und C in Diagrammform dargestellt.

Zu Beginn des Trocknungsprozesses sinkt die relative Luftfeuchtigkeit ϕ durch das Abpumpen der Luft aus dem Aufnahmegefäß 2 kurzzeitig auf einen niedrigeren Wert. Anschließend verdampft das Wasser aus dem zu trocknenden Material 1 durch Erwärmen desselben und die gemessene relative Luftfeuchtigkeit ϕ der abgepumpten Luft 37 steigt rasch an. Um die Feuchtigkeit aus dem Aufnahmegefäß 2 schnell abzutransportieren wird in diesem Bereich von beispielsweise ϕ > 40 % ein großer Luftstrom durch das Aufnahmegefäß 2 eingestellt. Bei Absinken des Meßwertes der relativen Luftfeuchtigkeit ϕ im Laufe des Trocknungsvorganges wird der Luftstrom 20 in das Aufnahmegefäß 2 reduziert, so daß der Druck p im Aufnahmegefäß 2 sinkt, was zu einer Erniedrigung des Siedepunktes des Wassers führt und eine zusätzliche Trocknung der Probe 1 bewirkt.

Bei einem vorbestimmten Grenzwert der relativen Luftfeuchtigkeit ϕ von beispielsweise etwa 18 % wird die Probe 1 als ausreichend trocken angesehen und der Trocknungsprozeß, d.h. die Erwärmung des Materials 1 und die Zufuhr und das Abpumpen des Transportgases können beendet werden. Durch Vorhandensein eines Trocknungsmittels 29, wie beispielsweise N₂, kann der Trocknungsprozeß zusätzlich unterstützt werden.

Aus den ermittelten zeitlichen Verläufen der relativen Luftfeuchtigkeit ϕ ist es außerdem möglich, beispielsweise durch Aufintegrieren der Meßwerte von ϕ über die Zeit, den ursprünglichen Wassergehalt der zu trocknenden Probe 1 vor Beginn des Trocknungsprozesses zu bestimmen. Dieser wert hat eine höhere Selektivität als die übliche gravimetrische Bestimmung des Gewichtsverlustes der Probe 1 während des Trocknungsprozesses, da der Gewichtsverlust durch alle flüchtigen Anteile des zu trocknenden Materials 1 beeinflußt wird.

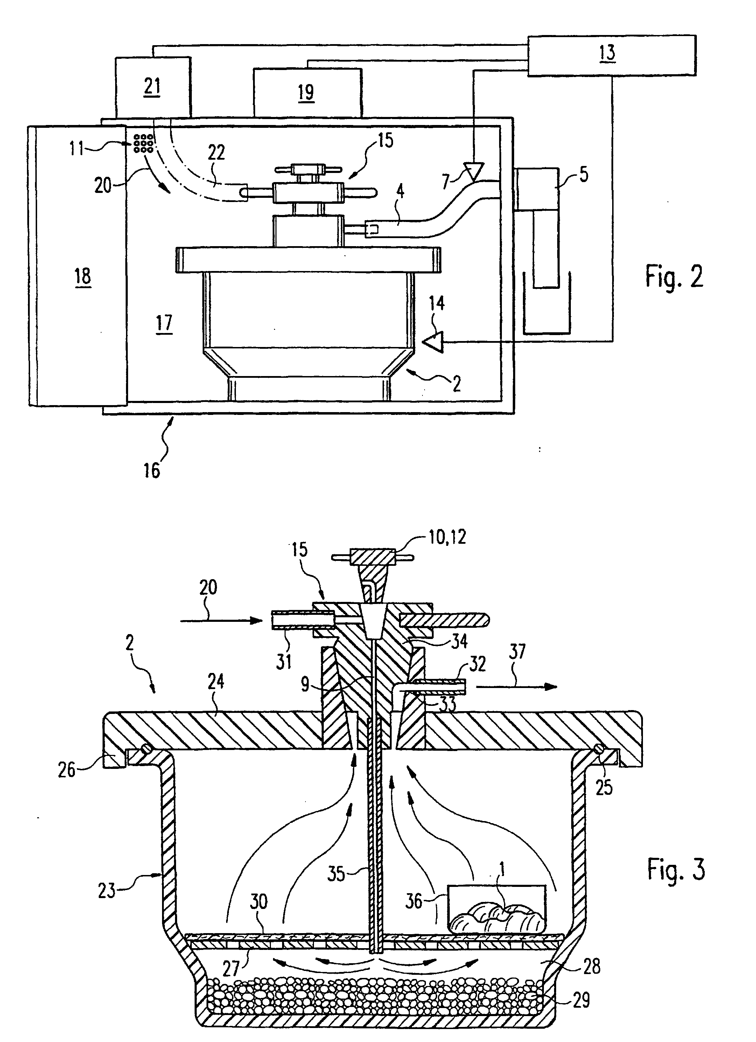

Anhand der Fig. 2 und 3 soll nun ein bevorzugtes Ausführungsbeispiel der Vorrichtung zur Durchführung des oben beschriebenen Trocknungsverfahrens im einzelnen beschrieben werden. Eine derartige Vorrichtung ist bereits aus der DE 43 22 499 A1 im wesentlichen bekannt.

Das Aufnahmegefäß 2 für das zu trocknende Material 1 mit einer entsprechenden Gasspüleinrichtung 15 zur Durchführung des Transportgases 20 durch das Aufnahmegefäß 2 sind in einem Mikrowellen-Heizgerät 16 mit einem Heizraum 17 angeordnet, der durch eine frontseitige Tür 18 verschließbar ist. Der Prozeßrechner 13 regelt die außerhalb des Heizraumes 17 angeordnete Saug- bzw. Vakuumpumpe 5, und den außerhalb des Heizraumes 17 angeordneten Mikrowellengenerator 19 in Abhängigkeit von dem mittels des andeutungsweise dargestellten Temperatursensors 14 erfaßten Temperatur-Meßwertes T des zu trocknenden Materials 1 und dem mittels des andeutungsweise dargestellten Sensors 7 erfaßten Meßwertes der relativen Luftfeuchtigkeit ϕ der aus dem Aufnahmegefäß 2 abgepumpten Luft 37.

In der Wandung des Mikrowellen-Heizgerätes 16 ist eine Lufteinlaßöffnung 11, zum Beispiel in Form von mehreren kleinen Durchgangslöchern, vorgesehen, durch die hindurch im Saugbetrieb der Vakuumpumpe 5 Transportluft 20 eingesaugt wird, die durch die Zuleitung 9 strömt, das Aufnahmegefäß 2 durchströmt und zur Vakuumpumpe 5 abgesaugt wird, wie dies durch Pfeile in den Fig. 2 und 3 verdeutlicht ist. Bei der Transportluft 20 sollte es sich um ein möglichst trockenes Gas handeln, wobei auch Raumluft verwendet werden kann. Es ist aber vorteilhaft, ein Inertgas, wie zum Beispiel N₂, zu verwenden. In diesem Fall ist außerhalb des Mikrowellen-Heizgerätes 16 eine Inertgasquelle 21 vorgesehen, die durch eine den Heizraum 17 durchsetzenden Leitungsverbindung 22 mit der Zuleitung 9 verbindbar ist.

Das Aufnahmegefäß 2 besteht beispielsweise aus einem topfförmigen Gefäß 23 mit einem flachen Deckel 24, der auf dem oberen Rand des topfförmigen Gefäßes 23 aufliegt. Zur Verbesserung der Abdichtung ist zwischen Gefäß 23 und Deckel 24 eine Ringdichtung 25, hier ein O-Ring, vorgesehen und der Deckel 24 übergreift mit einem nach unten vorstehenden Ringansatz 26 den oberen Rand des topfförmigen Gefäßes 23. Ein besonderes Verschließen des Aufnahmegefäßes 2 ist nicht erforderlich, da der von der Vakuumpumpe 5 erzeugte Unterdruck im Aufnahmegefäß 2 für einen festen und dichten Verschluß zumindest während des Trocknungsvorganges sorgt. Das zu trocknende Material 1 wird entweder direkt oder gegebenenfalls in einem oder mehreren Behältern 36 in das topfförmige Gefäß 23 eingebracht.

Im unteren Bereich des topfförmigen Gefäßes 23 ist ein Siebboden bzw. eine Lochplatte 27 vorgesehen, bei dem bzw. der es sich vorzugsweise um ein separates Bauteil handelt, welches in das Gefäß 23 einlegbar ist. Die Lochplatte 27 liegt dabei beispielsweise auf einer Querschnittsverjüngung des Gefäßes 23 auf. Der Teilraum 28 unterhalb der Lochplatte 27 dient zur Aufnahme eines Trocknungsmittels 29, das zum Beispiel aus N₂ bestehen kann. Es ist vorteilhaft, nur so viel Trocknungsmittel 29 in den Teilraum 28 einzufüllen, daß zwischen dem Trocknungsmittel 29 und der Lochplatte 27 ein Abstand von mehreren Millimetern vorhanden ist.

Auf der Lochplatte 27 ist ein Verteiler in Form einer Filterscheibe 30 angeordnet, bei der es sich beispielsweise um eine Glasfilter-Matte handeln kann.

Die Gasspüleinrichtung 15 weist einen Zuführungs-Leitungsanschluß 31 und einen Abführungs-Leitungsanschluß 32 auf, die die Durchführung und Spülung des Transportgases 20 durch das Aufnahmegefäß 2 ermöglichen. Vom Zuführungs-Leitungsanschluß 31 führt ein Kanal bzw. die Zuleitung 9 in das Aufnahmegehäuse 2, und ein Kanal bzw. eine Abführungsleitung 33 erstreckt sich aus dem Aufnahmegefäß 2 zum Abführungs-Leitungsanschluß 32, der wiederum über die Abführungsleitung 4 mit der Vakuumpumpe 5 verbindbar ist. Jede Leitung 9, 33 ist durch ein Ventil 10, 12 bzw. 34 wahlweise zu öffnen und zu schließen. Im Ausführungsbeispiel von Fig. 3 sind diese Ventile 10, 12, 34 als manuell betätigbare Absperrventile in Form von kegelförmigen Stopfen ausgebildet, die jeweils in einen entsprechenden Hohlkegelsitz dicht einsetzbar und durch Drehen zu öffnen und zu schließen sind. Alternativ zu dieser Ausführungsform ist es jedoch insbesondere von Vorteil diese Ventile 10, 12, 34 als elektrisch betätigbare und durch den Prozeßrechner 13 steuerbare Drossel- und Absperrventile auszubilden.

Die Zuführungsleitung 9 erstreckt sich vertikal durch die Gasspüleinrichtung 3, wobei sie durch ein dünnes Rohr 35 nach unten in das Aufnahmegefäß 2 hinein verlängert ist, das sich vorzugsweise bis in den Teilraum 28 erstreckt und dabei die Lochplatte 27 in einem Loch durchsetzt.

Es ist von Vorteil, Teile des Aufnahmegefäßes 2, wie insbesondere dessen Wandung und/oder die Lochplatte 27 und/oder die Filterscheibe 30 und/oder die Behälter 36, aus einem mikrowellen-absorbierenden Material auszubilden. Dies führt einerseits zu einer zusätzlichen indirekten Erwärmung des zu trocknenden Materials 1 und andererseits zu einer größeren Wärmekapazität des Systems, die ein Nachtrocknen des Materials 1 auch noch nach Abschalten der Mikrowellen-Bestrahlung 3 ermöglicht. Als mikrowellenabsorbierendes Material eignet sich beispielsweise PTFE mit eingelagerten Kohlenstoffpartikeln.

### Bezugszeichenliste

- 1: zu trocknendes Material
- 2: Aufnahmegefäß
- 3: Mikrowellen-Bestrahlung
- 4: Abführungsleitung
- 5: Vakuumpumpe
- 6: Luftauslaß mit Schalldämpfer
- 7: Sensor für ϕ
- 8: Druckmeßgerät für p
- 9: Zuleitung
- 10: Drosselventil
- 11: Einlaßöffnung
- 12: Absperrventil
- 13: Prozeßrechner
- 14: Temperaturmeßgerät
- 15: Gasspüleinrichtung
- 16: Mikrowellen-Heizgerät
- 17: Heizraum
- 18: frontseitige Tür
- 19: Mikrowellengenerator
- 20: Transportgas
- 21: Inertgasquelle
- 22: Leitungsverbindung
- 23: topfförmiges Gefäß
- 24: Deckel
- 25: Ringdichtung
- 26: Ringansatz des Deckels
- 27: Lochplatte
- 28: Teilraum
- 29: Trocknungsmittel
- 30: Filterscheibe
- 31: Zuführungs-Leitungsanschluß
- 32: Abführungs-Leitungsanschluß
- 33: Abführungsleitung
- 34: Ventil
- 35: Rohr
- 36: Behälter
- 37: (Ab-)Luft

## Patentansprüche

1. Vorrichtung zum Trocknen von Materialien (1),
- mit einem Mikrowellen-Heizgerät (16), das einen Heizraum (17) und eine Mikrowellen-Strahlungsquelle (19) aufweist,
- und mit einem luftdicht verschließbaren Aufnahmegefäß (2) im Heizraum (17) zur Aufnahme eines zu trocknenden Materials (1),
- wobei das Aufnahmegefäß (2) einen Leitungsanschluß (32) und eine damit verbundene Abführungsleitung (4) zum Abführen oder Abpumpen von Luft (37) aus dem Aufnahmegefäß (2) aufweist,
- wobei der Leitungsanschluß (32) bzw. die Abführungsleitung (4) mit einer Vakuumpumpe (5) verbunden ist,
- und wobei das Aufnahmegefäß (2) mit einer Gaseinlaßöffnung (11) zum Einleiten eines Transportgases (20) in das Aufnahmegefäß (2) verbunden ist,
**gekennzeichnet durch**
eine mit dem Leitungsanschluß (32) verbundene Meßvorrichtung (7) zum Messen der relativen Luftfeuchtigkeit (ϕ) der aus dem Aufnahmegefäß (2) abgeführten oder abgepumpten Luft (37) und
einen Vorrichtungsteil (13) zum Steuern oder Regeln der Mikrowellen-Heizleistung in Abhängigkeit von dem erfaßten Meßwert der relativen Luftfeuchtigkeit (ϕ).

2. Vorrichtung nach Anspruch 1,
**dadurch gekennzeichnet,**
**daß** der Leitungsanschluß (31) und/oder die Gaseinlaßöffnung (11) mit einem Ventil (10, 12) versehen ist bzw. sind.

3. Vorrichtung nach einem der Ansprüche 1 oder 2,
**dadurch gekennzeichnet,**
**daß** in dem Aufnahmegefäß (2) ein Trocknungsmittel (29) vorgesehen ist.

4. Vorrichtung nach einem der Ansprüche 1 bis 3,
**gekennzeichnet durch**
einen Vorrichtungsteil (13) zum Steuern oder Regeln der Menge des dem Aufnahmegefäß (2) zugeführten Transportgases (20) und/oder der Menge der aus dem Aufnahmegefäß (2) abgeführten oder abgepumpten Luft (37).

## Claims

1. Device for drying materials (1),
with a microwave heater (16) having a heat chamber (17) and a source of microwave radiation (19),
with an hermetically sealed receiving vessel (2) in the heat chamber (17) for holding a material (1) to be dried,
whereby the receiving vessel (2) has a pipe connector (32) and an outlet line (4) connected to it for exhausting or evacuating air (37) from the receiving vessel (2), whereby the pipe connector (32) or the outlet line (4) is connected with a vacuum pump (5),
and whereby the receiving vessel (2) is connected with a gas inlet port (11) for introducing a transportation gas (20) into the receiving vessel (2),
**characterized in that** a measuring device (7) connected with the pipe connector (32) for measuring the relative air humidity (ϕ) of the air (37) evacuated or exhausted from the receiving vessel (2) and
a computer (13) for controlling or regulating the microwave heat output as a function of the recorded level of relative air humidity (ϕ)

2. Device according to claim 1, **characterized in that** the pipe connector (31) and/or the gas inlet port (11) is/are provided with a valve (10, 12).

3. Device according to any one of claims 1 or 2, **characterized in that** a drying means (29) is provided in the receiving vessel (2).

4. Device according to any one of claims 1 to 3, **characterized by** a computer (13) to control or regulate the quantity of transportation gas (20) fed to the receiving vessel (2) and/or the quantity of air (37) evacuated or exhausted from the receiving vessel (2).

## Revendications

1. Dispositif permettant de sécher des matériaux (1), comprenant :
- un appareil de chauffage par micro-ondes (16) présentant une chambre de chauffe (17) et une source de rayonnement de micro-ondes (19),
- et un récipient (2) pouvant être scellé hermétiquement dans la chambre de chauffe (17) pour recevoir un matériau à sécher (1),
- le récipient (2) présentant un raccordement de conduit (32) et un conduit d'évacuation (4) relié à celui-ci pour évacuer ou pomper l'air (37) du récipient (2),
- le raccordement de conduit (32) ou le conduit d'évacuation (4) étant relié à une pompe à vide (5),
- et le récipient (2) étant relié à un orifice d'entrée de gaz (11) pour introduire un gaz transporteur (20) dans le récipient (2),
**caractérisé par**
un dispositif de mesure (7), relié au raccordement de conduit (32), pour mesurer l'humidité relative de l'air (ϕ) de l'air (37) évacué ou pompé du récipient (2) et
une partie de dispositif (13) permettant de commander ou de réguler la puissance de chauffage par micro-ondes en fonction de la valeur mesurée détectée de l'humidité relative de l'air (ϕ).

2. Dispositif selon la revendication 1, **caractérisé en ce que** le raccordement de conduit (31) et/ou l'orifice d'entrée de gaz (11) est/ sont muni(s) d'une vanne (10, 12).

3. Dispositif selon l'une quelconque des revendications 1 ou 2, **caractérisé en ce qu'**un produit de séchage (29) est prévu dans le récipient (2).

4. Dispositif selon l'une quelconque des revendications 1 à 3, **caractérisé par** une partie de dispositif (13) pour commander ou réguler la quantité du gaz transporteur (20) amené au récipient (2) et/ou la quantité de l'air (37) évacué ou pompé du récipient (2).
